# EUROPEAN PATENT SPECIFICATION

(11) **EP 3 424 696 B1**
(45) Date of publication and mention of the grant of the patent: **27.09.2023**
(21) Application number: 18181174.6
(22) Date of filing: 02.07.2018
(51) Int. Cl.: B29D 99/00, B29C 70/46, B29C 70/52, B29C 70/54, B29C 67/00, B29K 101/12, B29L 31/08, B29L 31/00

(54) **METHOD OF TAPERING A FIBRE-REINFORCED COMPOSITE STRIP**
VERFAHREN ZUM VERJÜNGEN EINES FASERVERSTÄRKTEN VERBUNDSTREIFENS
PROCÉDÉ DE RÉTRÉCISSEMENT D'UNE BANDE COMPOSITE RENFORCÉE PAR DES FIBRES

(30) Priority: 04.07.2017 DK PA201770546
(43) Date of publication of application: 09.01.2019
(73) Proprietor: VESTAS WIND SYSTEMS A/S, 8200 Aarhus N (DK)
(72) Inventor: STEWART, Ian, Southampton, Hampshire SO14 6GE (GB)
(74) Representative: Vestas Patents Department

(56) References cited:
- WO-A1-2011/092486
- WO-A1-2014/000742
- GB-A- 2 482 345
- US-A1- 2014 154 091

## Description

### Technical Field

The present invention relates to tapered fibre-reinforced composite strips such as those used in structural elements in wind turbine blades and to methods and apparatus for making such strips. In particular embodiments of the invention, a plurality of tapered strips are used to form a spar cap for a wind turbine blade.

### Background

Fibre-reinforced composite strips may be used to form structural members in a variety of different applications. Such strips typically contain structural fibres such as carbon or glass fibres extending along the length of the strip and suspended in a matrix material typically comprising a thermoset resin. Such strips may have a high tensile strength, and hence have a high load bearing capacity. The strips may be stacked on top of one another and bonded together to form a laminate component having structural properties suitable for strengthening a wind turbine blade, for example as a spar cap.

To form a spar cap, for example, a stack of composite strips may be bonded together using an adhesive such as resin. A resin infusion process may be used, in which liquid resin is infused between the stacked strips. The strips may be generally rectangular in cross section, and have upper and lower adherend surfaces bonded to similar adherend surfaces of adjacent strips in the stack.

The strips in the stack may have different lengths and their respective ends may be arranged in a staggered relation to form a spar cap that decreases in thickness towards one or both ends. In order to form a smooth transition between the strips and avoid stress concentrations in the stack, the ends of the strips may be tapered.

Such composite strips are typically produced by pultrusion. However, the pultrusion process, as well as other known strip producing methods, produces a strip having a uniform cross-section along its length. Accordingly, the strip must be subsequently modified in order to create a tapered end. One known method of creating a tapered end of a composite strip involves a grinding process as described in WO2015/067279.

US2014/154091 describes a spar for a wind turbine blade which is produced from a stack of pultruded composite layers. WO2011/092486 describes a method of tapering an edge of a fibrous reinforcement strip or sheet. WO2014/000742 and GB2482345 also describe a method and apparatus for providing a tapered edge on a sheet comprising fibrous material.

Grinding of the strips presents several challenges to the manufacturing process. For example, the grinding process creates significant amounts of dust and noise and can be a time-consuming process. In some cases, the grinding process can also cause damage to the strips, which may then need to be discarded.

Against this background, it is an object of the invention to mitigate or overcome some or all of the problems described above.

### Summary

The present invention provides a method of making a structural component of a wind turbine blade comprising providing an elongate composite strip comprising structural fibres disposed in a thermoplastic matrix, the strip comprising an end portion defining an end of the strip, heating the end portion of the strip and shaping the end portion of the strip to form a tapered end of the strip by compressing the end portion.

The strip has a constant thickness along its entire length prior to moulding and tapers in thickness after moulding such that the tapered end portion has substantially straight end edge. In some embodiments, the end portion may also taper in width. The strip is a precured item, in other words the thermoplastic material in the strip has cured before the end portion of the strip is heated.

Shaping the end portion of the strip comprises compressing the end portion, for example compressing the end portion between first and second mould surfaces.

In some embodiments, the end portion of the strip is provided with one or more recesses prior to shaping the end portion to form the tapered end. For example, prior to shaping the end portion to form the tapered end, the end portion may have a zigzag profile in which the one or more recesses are defined between serrations. More broadly, the or each recess may vary in width and have a maximum width at or adjacent the end of the strip.

The method may further comprise removing material from the end portion to form the one or more recesses. In embodiments, the one or more recesses may be formed by a dividing cut in which a longer strip is divided into a plurality of shorter strips.

The method may comprise heating the end portion to a temperature that is greater than or equal to a glass transition temperature of the thermoplastic matrix.

In any of the embodiments described above the strip may be a pultruded strip.

The method may comprise shaping the end portion of the strip to define a linear taper or a parabolic taper or a stepped taper, for example.

Preferably, after the step of heating the end portion of the strip, no material is removed from the strip in order to form the tapered end of the strip. In other words, no material is removed by grinding or milling or the like.

The present invention also provides a composite strip having a tapered end formed by the method described in relation to any of the embodiments above. A fibre volume fraction of the tapered end may be substantially the same as a fibre volume fraction of the remainder of the strip.

In embodiments of the invention, a spar cap for a wind turbine blade comprises a stack of composite strips integrated together. One or more of the composite strips is a strip according to any of the embodiments described above. A wind turbine blade may comprise such a spar cap.

### Brief description of the drawings

The present invention and further relevant background will now be described by way of nonlimiting example, with reference to the accompanying figures in which:
Figure 1 is a detail view of an end portion of a fibre reinforced composite strip in which a taper may be formed;
Figure 2 shows the composite strip of Figure 1 after material has been removed from an end portion of the strip to form a zigzag end;
Figure 3 shows a tapered end of the composite strip of Figure 2 after the zigzag end has been compressed;
Figures 4a and 4b show an apparatus for moulding an end portion of a pultruded strip according to an embodiment of the invention;
Figure 5 is a detail view of a tapered end portion of a composite strip in accordance with a further embodiment of the invention;
Figure 6 is a detail view of a tapered end portion of a composite strip in accordance with a yet further embodiment of the invention;
Figure 7 is a schematic side view of a pultrusion process for forming a composite strip;
Figure 8 is a cross sectional view of a component comprising a plurality of tapered strips; and
Figure 9 is a cross-sectional view of a wind turbine rotor blade having a plurality of spar caps formed from tapered strips.

### Detailed description

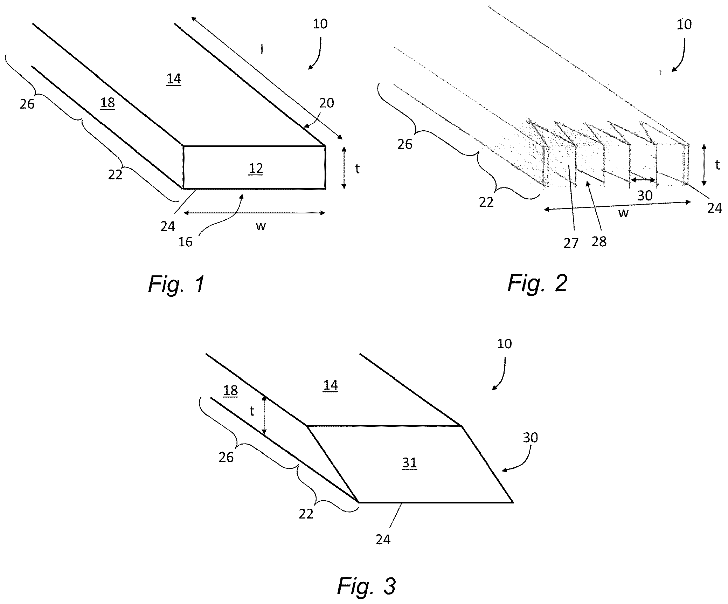

Figures 1 to 3 show an end portion of a fibre reinforced composite strip 10 during various stages of a tapering process according to an embodiment of the invention.

Figure 1 shows an end portion of a fibre reinforced composite strip 10 prior to tapering. The strip 10 has a constant rectangular cross-sectional profile such that the width w and thickness t of the strip are substantially constant along its length I. In particular embodiments, the strip may have a width w of between 100m and 200mm and a thickness of between 4mm and 6mm. The strip 10 has a rectangular end face 12 extending across its width w and generally perpendicular to the length I of the strip 10. The width w is greater than the thickness t of the strip 10. The strip 10 therefore has two opposing major surfaces 14, 16 extending perpendicularly between two side surfaces 18, 20 of the strip 10.

The strip 10 includes an end portion 22 extending from an end 24 of the strip 10 and along a portion of the length I of the strip 10. A main portion 26 of the strip 10 extends from the end portion 22 along a majority of the remainder of the strip 10.

The strip 10 is formed from a plurality of structural fibres, e.g. carbon and/or glass fibres, suspended in a thermoplastic matrix material, e.g. a thermoplastic resin. The matrix material surrounds the structural fibres to hold them together and to form the external shape of the strip. In a particular embodiment, the strip 10 comprises a plurality of continuous carbon fibres extending along the length I of the strip and suspended in a high density polyethylene (HDPE) matrix material. Any other suitable thermoplastic matrix materials may be used in other embodiments. The strip 10 is preferably manufactured by pultrusion, although the strip may be manufactured by any other suitable method.

The strip 10 of the embodiment has a substantially constant fibre volume fraction along its length, wherein the fibre volume fraction is the percentage of fibre volume in the total volume of the composite strip 10. In particular embodiments, the fibre volume fraction of the exemplary strip 10 is between 60% and 90%. The fibres may also be arranged uniformly throughout the cross-sectional profile of the strip.

Figure 2 shows the end portion 22 of the strip 10 of Figure 1 after material has been removed from the end portion 22. In the illustrated embodiment, material has been removed to form a zigzag profile in the end portion 22 of the strip 10.

The zigzag profile comprises a plurality of serrations 27 alternating with a plurality of recesses 28 across the width of the strip 10. In this embodiment, the serrations 27 and recesses 28 are substantially triangular in plan view. The recesses 28 are substantially free of composite material such that the volume of composite material per unit length in the end portion 22 is now less than that in the main portion 26 of the strip 10. More particularly, the recesses 28 of the embodiment each have a width 30 that increases as it approaches the end 24 of the strip 10. As such, the volume of composite material per unit length in the end portion 22 reduces as it approaches the end 24 of the strip 10. It will be appreciated that other end profiles could be used which also provide such a reduction in volume per unit length.

In the embodiment shown, the volume of material in the end portion 22 substantially corresponds to the volume of material in the desired taper such that no additional material needs to be removed during the subsequent forming of the taper.

The recesses 28 may be created in the strip 10 by any means known in the art. In one embodiment the recesses 28 are formed via die cutting, for example using a metal die having a zigzag cutting edge. Any waste material removed as a result of forming the recesses 28 may be recycled.

In accordance with an exemplary method, the composite strip 10 shown in Figure 2 is subsequently heated and moulded to provide a strip 10 having a tapered end, i.e. an end portion 22 with tapering thickness t as shown in Figure 3.

Figure 3 shows the end portion 22 of the strip of Figure 2 after forming it into a tapered end 30 in accordance with the invention. The main portion 26 of the strip 10 has a constant rectangular cross-sectional profile along its length and is substantially free of voids. The end portion 22 no longer includes recesses and instead tapers in thickness t towards the end 24 of the strip. In this particular embodiment, the tapered end 30 tapers linearly such the end portion 22 has a generally triangular profile on the side surface 18 thereof. The tapered end 22 defines a tapered end surface 31, which is inclined relative to the first major surface 14 of the main portion 26 the strip 10.

Prior to forming the taper 30, the strip 10 is heated to soften the thermoplastic matrix material. In particular embodiments, the end portion 22 of the strip 10 is positioned in an oven and heated. More particularly, the end portion 22 is heated to greater than or equal to the glass transition temperature of the thermoplastic matrix material. In embodiments the end portion 22 is heated to a temperature that is between the glass transition temperature and the melting temperature of the thermoplastic material. In embodiments, the oven heats to a temperature greater than 60°C, the glass transition temperature of the HDPE matrix material, but less than 130°C, the melting temperature of HDPE. For example, the end portion 22 is heated to between 60°C and 100°C such as between 70°C and 90°C. The glass transition temperature may be established by the use of the dynamic mechanical thermal analysis (DMTA) method.

The heated matrix material in the end portion 22 is softer than the main portion 26 of the strip 10 and is therefore able to be moulded. Once softened, the end portion 22 of the strip 10 may then be shaped into the desired taper 30 using a compression mould.

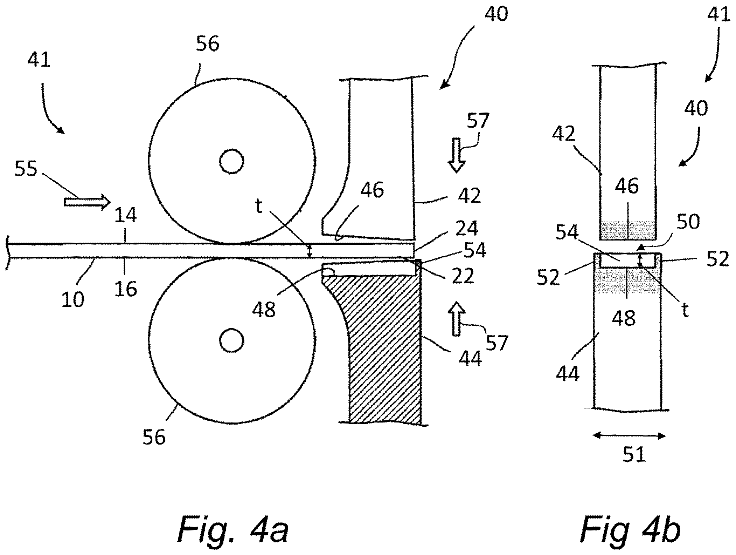

Figures 4a and 4b illustrate a moulding apparatus 41 comprising a compression mould 40 for forming a taper 30 according to an embodiment of the invention. Figure 4a is a cross-sectional side-view of the apparatus 41, whilst Figure 4b is a front view of the compression mould 40 seen from a feed direction indicated in Figure 4a.

Referring to Figure 4a, the compression mould 40 includes an upper mould part 42 positioned above the end portion 22 and a lower mould part 44 positioned below the end portion 22 of the strip 10. The upper and lower mould parts 42, 44 include upper and lower mould surfaces 46, 48 for contacting the major surfaces 14, 16 of the strip 10. In the illustrated embodiment, the upper mould surface 46 is a flat plate inclined relative to the first major surface 14 of the strip 10. The lower mould surface 48 is also a flat plate, which in this example is generally parallel to second major surface 16 of the strip 10.

As best shown in Figure 4b, the lower mould part comprises a cavity 50 which defines the lower mould surface 48 and further defines side surfaces 52 spaced from each other in the width direction 51 and a flat back plate 54 extending between the side surfaces 52. In the illustrated embodiment, the spacing between the side surfaces 52 is substantially equal to the width w of the strip 10 (as indicated in Figure 1).

The mould parts 42, 44 are each moveable towards each other in the thickness direction t, as shown generally by the arrows 57 in Figure 4a, such that they press against the opposing major surfaces 14, 16 of the strip 10 positioned therebetween. In other embodiments, the mould 40 may be configured such that only one of the mould parts is moved to achieve the required compression.

Pressure on the end portion 22 of the strip 10 exerted by the mould parts 42, 44 causes the end portion 22 to deform and adopt a shape corresponding to the mould surfaces 46, 48, i.e. a taper. When the end portion 22 is compressed, the heated thermoplastic matrix material in the serrations 27 (shown in Figure 2) spreads into the adjacent recesses 28 of the zigzag profile (shown in Figure 2) allowing the end portion 22 to be formed into the tapered end profile 30 shown in Figure 3.

It will be appreciated that the triangular shapes of the serrations and recesses 27, 28 shown in Figure 2 is advantageous, since the most material is removed at and adjacent the end 24 of the strip where the reduction in thickness t is greatest, thus creating more space for the thermoplastic matrix of the serrations 27 to spread laterally into the recesses at the end 24 of the strip 10.

The relative positioning of the upper and lower mould surfaces 46, 48 forms the desired taper thickness. The side surfaces 52 and back plate 54 ensure the width w and length I of the strip 10 remain substantially constant during moulding such that any thermoplastic material spreading outwards under the pressure of the upper and lower surfaces 46, 48 does not spread beyond the side surfaces 52 or back plate 54.

The mould parts 42, 44 may also be heated to further soften and/or to maintain the elevated temperature of the thermoplastic material during compression and thereby improve the mouldability thereof. In the illustrated embodiment, the mould parts 42, 44 may be heated to a temperature greater than or equal to 60°C.

The end portion 22 of the strip 10 may optionally be fed, in a feed direction indicated by the arrow 55, such that it is in-between the two mould parts 42, 44 by a pair of rollers 56, as shown in Figure 4a.

Due to the reduced volume of material in the end portion 22, little or no waste material or 'flash' is produced during the compression moulding. As both fibres and matrix material are removed to form the zigzag profile (shown in Figure 2), the fibre volume fraction of the tapered end portion 30 is advantageously similar to and preferably substantially the same as the fibre volume fraction of the main part 24 of the strip 10.

The end portion 22 may then be cooled by any method known in the art to solidify the thermoplastic matrix material in the tapered end portion 22. After cooling, the thermoplastic material of the end portion 22 has substantially the same properties as the thermoplastic material of the main portion 24 of the strip 10. No stress concentrations are added to the end portion 22 of the strip 10 during the tapering process. In certain embodiments, the matrix material may be cooled while still under the pressure provided by mould parts 42, 44. For example, the mould parts may include heating and/or cooling circuits therein.

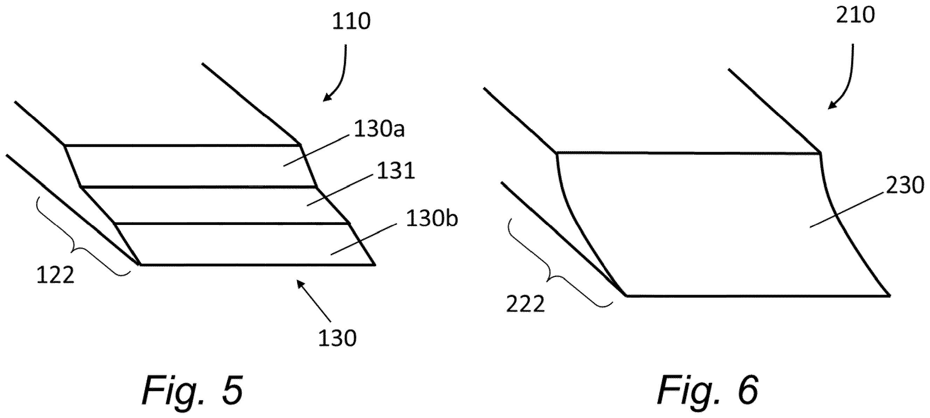

Figure 5 shows an end portion 122 of a composite strip 110 having a taper 130 in accordance with a further embodiment of the invention. The end portion 122 differs from the embodiment of Figure 3 in that the end portion 122 has a stepped taper. More particularly, the end portion has two, spaced apart tapered regions 130a, 130b and a region 131 having little or no taper positioned between the tapered regions 130a, 130b.

Figure 6 is a detail view of an end portion 222 of a composite strip 210 having a taper 130 in accordance with a yet further embodiment of the invention. The end portion 222 differs from the embodiment of Figures 3 and 5 in that the resulting taper 230 has a parabolic profile or curved taper.

The tapers 130, 230 shown in Figures 5 and 6 can be created by the same method as described above in relation to Figure 3 and using correspondingly-shaped moulding surfaces.

In any of the described embodiments, the taper 30, 130, 230 may have a gradient of 1:100. For example, for a 5mm thick strip the taper starts at 500mm from the end of the strip and the thickness at the end of the strip is 0mm. In further embodiments, the taper could have a gradient of between 1:50 and 1:200, and preferably about 1:100.

In general, the present invention involves providing a composite strip comprising a thermoplastic material and forming an end portion of the strip into a tapered shape using heat and pressure. Prior to heat forming, material may be removed from the end portion of the composite strip. Removing material results in the end portion having a lower volume of composite material per unit length than a main portion of the strip. Consequently, the resulting taper may advantageously have a similar fibre volume fraction as the main portion of the strip.

The moulding of the taper as described above presents a number of advantages compared to known tapering techniques such as grinding. For example, the method may provide a safer and easier way of producing a tapered strip. The method may also reduce residual stresses at the surface of the strip which may be caused by machining.

It will be appreciated that the above method would not be possible with strips formed from a thermoset matrix material, which is typically used in such strips, because thermoset matrix materials cannot be reshaped by moulding. As is known in the art, thermoplastic materials become plastic or deformable when heated and then harden when cooled. Heating of the thermoplastic material does not substantially change the chemical properties of the thermoplastic, compared to thermoset materials in which irreversible cross-linking occurs. Thermoplastic materials, in contrast to thermosets, can also be more readily recycled, hence the strips of the present invention provide the advantage that they may be recycled at the end of their serve life.

Another advantage of the present invention is that it involves the deformation in only a localised region of the strip. Deforming only a relatively small localized region of the strip requires only minimal heating energy and may be achieved quickly with a minimum of labour and tooling compared to heat forming the whole strip, for example. The tooling can therefore be compact and low in cost.

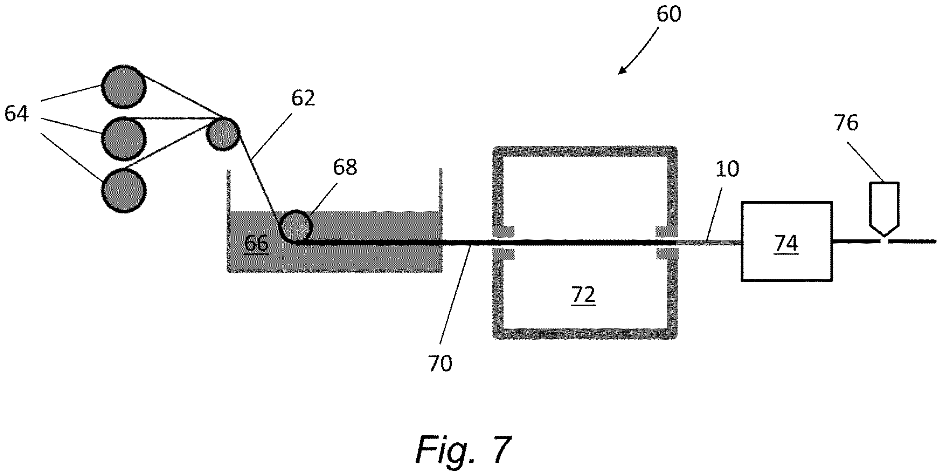

In embodiments, the composite strip that is to be tapered is formed by a pultrusion process 60 as illustrated in Figure 7. The tapering method as described above may be incorporated into the process 60 for forming the strip 10. In the pultrusion process 60, carbon fibres 62 are pulled from at least one continuous reel 64 in a process direction by a pulling device (not shown). The fibres 62 are directed through a supply of molten thermoplastic matrix material 66, by rollers 68 which maintain tension in the fibres 62. The matrix-impregnated fibres 70 are then pulled through a die 72 having a cross-sectional profile for forming the material into the final desired cross-sectional shape of the strip 10. The strip 10 is then cooled at a cooling station 74 to solidify the matrix material 66 and set the strip 10.

Cooling of the strip 10 may be performed using any means known in the art. For example, the cooling station 74 may comprise a water tank, a cold air stream or a cooling jacket. The temperature at which the strip 10 is cooled may be controlled to achieve optimal mechanical properties as known in the art.

As will be appreciated, the temperature of the strip 10 may be controlled to achieve optimal properties as it advances through any section of the pultrusion process 60, for example using heaters and/or coolers.

The pultrusion process 60 produces a continuous strip 10 having a constant cross-sectional profile along its length. The strip 10 is cut into discrete portions by a cutting device 76. The portions of pultruded material are rolled into reels for subsequent processing such as the tapering method described above. The portions of pultruded material are subsequently divided into smaller lengths suitable for use in a spar cap of a wind turbine.

The cutting may be performed as part of the pultrusion or other strip forming process or may be a subsequent processing step. For example the strips 10 may first be cut into the desired length (e.g. forming a straight edge of the strip) and then subsequently be cut to form the recesses 28 as described above. Alternative the recesses 28 may be formed in the strips 10 with the dividing cut, for example the cutting means 76 may comprise a die cutter having a zigzag profile.

The tapering apparatus shown in Figures 4a and 4b may optionally be provided inline with the pultrusion apparatus.

Although the embodiments above relate to pultruded strips, it will be appreciated that the invention could also be applied to fibre reinforced strips made by other methods suitable for forming thermoplastic composite strips, including but not limited to extrusion and lamination.

The thermoplastic matrix material may be applied to the fibres by any means known in the art. For example, in the process of Figure 1 the fibres are drawn through a bath of liquid matrix material. Alternatively, the matrix material may be sprayed onto the fibres or extruded thereon.

Although the matrix material of the described embodiment comprises HDPE, other thermoplastic polymers could be used additionally or alternatively without departing from the scope of the invention. In another embodiment, for example, the matrix material may comprise polypropylene or acrylic e.g. ABS or ASA. The thermoplastic matrix material may comprise a polymer that may be a high molecular weight thermoplastic polymer, including but not limited to, polypropylene, polyethylene, nylon, PEI (polyetherimide) and copolymers, more preferably, polypropylene and/or polyethylene. Other suitable thermoplastic polymers for use in the present invention may include, for example, polyolefins, polycarbonates, polyamides, polyether ketones, polyetherimides, polyarylene ketones, liquid crystal polymers, polyarylene sulfides fluoropolymers, polyacetals, polyurethanes, polycarbonates, styrenic polymers, and other thermoplastic polymers known in the art.

The continuous fibres employed in the present invention may be formed from any conventional fibre material known in the art, such as metal fibres; glass fibres, carbon fibres (e.g. graphite), boron fibres, ceramic fibres (e.g. alumina or silica), aramid fibres, synthetic organic fibres and various other natural or synthetic inorganic or organic fibrous materials known for reinforcing thermoplastic composites. Glass fibres and carbon fibres are particularly desirable for use in the continuous fibres.

Although the described embodiments relate to tapering a strip having a substantially rectangular cross-section, the skilled person would appreciate that the present invention could be applied to composite strips having alternative cross-sectional shapes. For example, the strip could have a curved profile or any other alternative shape as known in the art. In these embodiments the mould parts would be shaped accordingly. In particular, the disclosed method allows effective tapering that would have been extremely difficult to achieve by grinding of a curved profile.

Alternative end profiles may be used to reduce the volume of composite material in the end portion prior to moulding, additionally or alternatively to the described zigzag profile. For example the end may have a sinusoidal, saw toothed, notched or wavy profile or any other regular or irregular geometries that would result in recesses. In alternative embodiments the end may comprise a smaller number of spaced apart notches. The notches may be triangular, square or semi-circular, for example.

It will be appreciated that the recesses described in relation to any of the embodiments above may be formed using other techniques know in the art such as by water jet, laser cutting, ultrasonic knives or a guided saw blade.

Furthermore, the end portion may be heated by other means known in the art such as infrared heating.

In embodiments where the matrix material comprises polypropylene, the end material may be heated to at least 90°C (the glass transition temperature of PP) and/or up to 180°C (the melting temperature of PP).

Although the process described above is performed on an end portion of a strip that has already been cut to the desired length, it will be appreciated that the process may also be applied to a portion of a strip that has yet to be cut. For example, a strip may comprise a dividing line through which the strip will subsequently cut. A portion of the strip either side of the dividing line will form end portions of the strip after cutting along the dividing line. Prior to cutting, material may be removed from the portions of the strip and thereafter the strip may be heated and tapered in two directions towards the dividing line. The strip may then subsequently be cut along the cutting line such that the resulting strips already include a taper. In such embodiments, the `end portion' to be tapered would be the portion of the strip adjacent the cutting line that would form the end portion of the strip after cutting.

In alternative embodiments, the side surfaces of the mould may have a varying spacing therebetween. For example, the spacing between the side surfaces may be equal to the width of the pultruded strip along the main portion thereof or alternatively may have converging surfaces in order to create a tapered width of the strip.

In alternative embodiments the upper or lower mould part could be fixed such that the other of the upper or lower mould part moves relative to the fixed part. The mould parts may move relative to each other in any manner such that they exert pressure on the surfaces of the strip to be tapered.

Although Figure 4a shows the strip being fed by rollers into the mould, other means of positioning the strip in between the mould parts are envisaged. For example, the strips might be placed in the mould manually or by robotic means. In embodiments, the moulding could be integrated into the pultrusion process such that the strip is pulled into position by the pultrusion apparatus as shown in Figure 7.

The tapered end portion of the strip, formed by any of the embodiments described above, desirably has substantially the same fibre volume fraction as the remaining portion of the strip. In some embodiments the fibre volume fraction is within 2%, for example within 1% or 0.5%, of the fibre volume fraction of the main portion of the strip. A lower fibre volume fraction would result in a lower stiffness, strength and strain to failure of that portion of the strip, which could lead to a large stress concentration locally around the taper. Accordingly, a more even fibre volume fraction will improve the mechanical properties of the strip and resulting component.

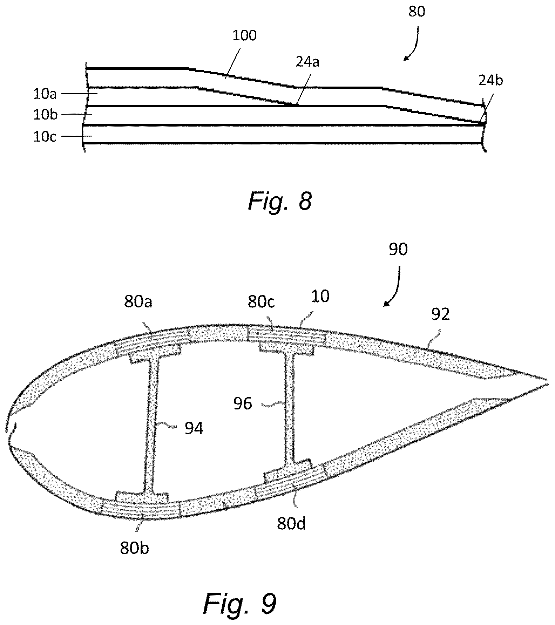

A tapered strip formed in accordance with the invention may be stacked together with a plurality of other tapered strips and bonded together to form a spar cap of a wind turbine blade, for example. Figure 8 is a side view showing a plurality of tapered strips 10a-c forming a component 80 such as a spar cap. The strips are of generally decreasing lengths from the lowermost strip 10c to the uppermost strip 10a such that the respective ends of the strips are staggered. The component 80 therefore generally reduces in thickness towards its end. The strips 10a and 10b also have tapered ends 24a, 24b formed according to the methods described above. The tapered ends 24a, 24b serve to spread the load path between adjacent strips 10 and avoids abrupt discontinuities between the layers such that stress concentrations that may initiate cracks or delamination are avoided.

The strips 10a-c may be bonded to each other using an adhesive such as resin. A resin infusion process may be used, in which liquid resin is infused between the stacked strips 10a-c to bond the major surfaces of adjacent strips 10a-c in the stack. A skin of composite material 100 may optionally be disposed on top of the stack of strips 10a-c to form a smooth surface of the component 80.

Figure 9 is a cross-sectional view of a wind turbine rotor blade 90 having a plurality of spar caps 80a-d. The blade 90 has an outer shell 92, which may be fabricated from two half shells. The shell is moulded from glass-fibre reinforced plastic (GRP). Parts of the outer shell 92 are of sandwich panel construction and comprise a blade core of lightweight foam (e.g. polyurethane), which is sandwiched between inner and outer GRP layers or 'skins'.

The blade comprises first and second pairs of spar caps 80a-d arranged between sandwich panel regions of the outer shell 92. One spar cap of each pair is integrated with the windward shell and the other spar cap of each pair is integrated with the leeward shell. The spar caps 80a-d of the respective pairs are mutually opposed and extend longitudinally along the length of the blade 90. A first longitudinally-extending shear web 94 bridges the first pair of spar caps 80a, 80b and a second longitudinally-extending shear web 96 bridges the second pair of spar caps 80c, 80d. The shear webs 94, 96 in combination with the spar caps 80a-d form a pair of I-beam structures, which transfer loads effectively from the rotating blade 90 to the hub of the wind turbine (not shown). The spar caps 80a-d in particular transfer tensile and compressive bending loads, whilst the shear webs 94, 96 transfer shear stresses in the blade 90.

Each spar cap 80a-d has a substantially rectangular cross section and is made up of a stack of pultruded strips 10, some or all of which have a tapered end portion as described above in relation to any of the embodiments. The number of strips 10 in the stack depends upon the thickness of the strips 10 and the required thickness of the shell, but typically there may be between four and twelve strips 10 in the stack.

The present invention is not limited to the exemplary embodiments described above and many other variations or modifications will be apparent to the skilled person without departing from the scope of the present invention as defined by the following claims.

## Claims

1. A method of making a structural component (80) of a wind turbine blade (90), the method comprising:
providing an elongate composite strip (10) comprising structural fibres disposed in a thermoplastic matrix, the strip comprising an end portion (22) defining an end (24) of the strip;
heating the end portion (22) of the strip (10); **characterised by**:
shaping the end portion (22) of the strip (10) to form a tapered end (30) of the strip by compressing the end portion.

2. The method of Claim 1, wherein shaping the end portion (22) of the strip (10) comprises compressing the end portion between first and second mould surfaces (46, 48).

3. The method of any preceding claim, wherein the end portion (22) of the strip (10) is provided with one or more recesses (28) prior to shaping the end portion to form the tapered end (30).

4. The method of Claim 3, wherein prior to shaping the end portion (22) to form the tapered end (30), the end portion has a zigzag profile in which the one or more recesses (28) are defined between serrations (27).

5. The method of Claim 3 or Claim 4, wherein the or each recess (28) varies in width and has a maximum width at or adjacent the end (24) of the strip.

6. The method of any of Claims 3 to 5, comprising removing material from the end portion (22) to form the one or more recesses (28).

7. The method of any of Claims 3 to 5, wherein the one or more recesses (28) are formed by a dividing cut in which a longer strip is divided into a plurality of shorter strips.

8. The method of any preceding claim, comprising heating the end portion (22) to a temperature that is greater than or equal to a glass transition temperature of the thermoplastic matrix.

9. The method of any preceding claim, wherein the strip (10) is a pultruded strip.

10. The method of any preceding claim, comprising shaping the end portion (22) of the strip (10) to define a linear taper or a parabolic taper or a stepped taper.

11. A composite strip (10) having a tapered end formed by the method of any preceding claim.

12. The composite strip (10) of Claim 11, wherein a fibre volume fraction of the tapered end (30) is substantially the same as a fibre volume fraction of the remainder of the strip.

13. A spar cap (80) for a wind turbine blade (90) comprising a stack of composite strips (10) integrated together, wherein one or more of the composite strips is a strip according to Claim 11 or Claim 12 or is made according to the method of any of Claims 1 to 10.

14. A wind turbine blade (90) comprising a spar cap (80) according to Claim 13.

## Patentansprüche

1. Verfahren zum Herstellen einer strukturellen Komponente (80) eines Windkraftanlagenblatts (90), wobei das Verfahren Folgendes umfasst:
Bereitstellen eines länglichen Verbundstreifens (10), der strukturelle Fasern umfasst, die in einer thermoplastischen Matrix angeordnet sind, wobei der Streifen einen Endabschnitt (22) umfasst, der ein Ende (24) des Streifens definiert;
Erhitzen des Endabschnitts (22) des Streifens (10); **gekennzeichnet durch**:
Formen des Endabschnitts (22) des Streifens (10), um ein verjüngtes Ende (30) des Streifens durch Komprimieren des Endabschnitts zu bilden.

2. Verfahren nach Anspruch 1, wobei Formen des Endabschnitts (22) des Streifens (10) Komprimieren des Endabschnitts zwischen einer ersten und einer zweiten Formoberfläche (46, 48) umfasst.

3. Verfahren nach einem vorstehenden Anspruch, wobei der Endabschnitt (22) des Streifens (10) mit einer oder mehreren Aussparungen (28) vor Formen des Endabschnitts zum Bilden des verjüngten Endes (30) bereitgestellt wird.

4. Verfahren nach Anspruch 3, wobei vor Formen des Endabschnitts (22) zum Bilden des verjüngten Endes (30) der Endabschnitt ein Zickzackprofil aufweist, bei dem eine oder mehrere Aussparungen (28) zwischen Zackenbändern (27) definiert sind.

5. Verfahren nach Anspruch 3 oder Anspruch 4, wobei die oder jede Aussparung (28) in der Breite variiert und eine maximale Breite am Ende (24) des Streifens oder an dieses angrenzend aufweist.

6. Verfahren nach einem der Ansprüche 3 bis 5, umfassend Entfernen von Material von dem Endabschnitt (22), um die eine oder mehreren Aussparungen (28) zu bilden.

7. Verfahren nach einem der Ansprüche 3 bis 5, wobei die eine oder mehreren Aussparungen (28) durch einen teilenden Schnitt gebildet werden, bei dem ein längerer Streifen in eine Vielzahl von kürzeren Streifen geteilt wird.

8. Verfahren nach einem vorstehenden Anspruch, umfassend Erhitzen des Endabschnitts (22) auf eine Temperatur, die höher oder gleich einer Glasübergangstemperatur der thermoplastischen Matrix ist.

9. Verfahren nach einem vorstehenden Anspruch, wobei der Streifen (10) ein gezogener Streifen ist.

10. Verfahren nach einem vorstehenden Anspruch, umfassend Formen des Endabschnitts (22) des Streifens (10), um eine lineare Verjüngung oder eine parabolische Verjüngung oder eine abgestufte Verjüngung zu definieren.

11. Verbundstreifen (10), der ein verjüngtes Ende aufweist, das durch das Verfahren nach einem vorstehenden Anspruch gebildet wird.

12. Verbundstreifen (10) nach Anspruch 11, wobei ein Faservolumenanteil des verjüngten Endes (30) im Wesentlichen der gleiche ist wie ein Faservolumenanteil des Restes des Streifens.

13. Gurt (80) für ein Windkraftanlagenblatt (90), umfassend einen Stapel von Verbundstreifen (10), die miteinander integriert sind, wobei ein oder mehrere der Verbundstreifen ein Streifen nach Anspruch 11 oder Anspruch 12 ist oder gemäß dem Verfahren nach einem der Ansprüche 1 bis 10 hergestellt ist.

14. Windkraftanlagenblatt (90), umfassend einen Gurt (80) nach Anspruch 13.

## Revendications

1. Procédé de fabrication d'un composant structural (80) d'une pale d'éolienne (90), le procédé comprenant :
une fourniture d'une bande composite allongée (10) comprenant des fibres structurales disposées dans une matrice thermoplastique, la bande comprenant une portion d'extrémité (22) définissant une extrémité (24) de la bande ;
un chauffage de la portion d'extrémité (22) de la bande (10) ; **caractérisé par** :
un façonnage de la portion d'extrémité (22) de la bande (10) pour former une extrémité effilée (30) de la bande en comprimant la portion d'extrémité.

2. Procédé selon la revendication 1, dans lequel un façonnage de la portion d'extrémité (22) de la bande (10) comprend une compression de la portion d'extrémité entre des première et seconde surfaces de moule (46, 48).

3. Procédé selon une quelconque revendication précédente, dans lequel la portion d'extrémité (22) de la bande (10) est pourvue d'un ou plusieurs évidements (28) avant un façonnage de la portion d'extrémité pour former l'extrémité effilée (30).

4. Procédé selon la revendication 3, dans lequel avant un façonnage de la portion d'extrémité (22) pour former l'extrémité effilée (30), la portion d'extrémité présente un profil en zigzag dans lequel les un ou plusieurs évidements (28) sont définis entre des dents de scie (27).

5. Procédé selon la revendication 3 ou la revendication 4, dans lequel l'évidement ou chaque évidement (28) varie en largeur et présente une largeur maximale au niveau de ou adjacente à l'extrémité (24) de la bande.

6. Procédé selon l'une quelconque des revendications 3 à 5, comprenant un retrait d'un matériau de la portion d'extrémité (22) pour former les un ou plusieurs évidements (28).

7. Procédé selon l'une quelconque des revendications 3 à 5, dans lequel les un ou plusieurs évidements (28) sont formés par une découpe de division dans laquelle une bande plus longue est divisée en une pluralité de bandes plus courtes.

8. Procédé selon une quelconque revendication précédente, comprenant un chauffage de la portion d'extrémité (22) à une température qui est plus grande que ou égale à une température de transition vitreuse de la matrice thermoplastique.

9. Procédé selon une quelconque revendication précédente, dans lequel la bande (10) est une bande pultrudée.

10. Procédé selon une quelconque revendication précédente, comprenant un façonnage de la portion d'extrémité (22) de la bande (10) pour définir un effilage linéaire ou un effilage parabolique ou un effilage étagé.

11. Bande composite (10) présentant une extrémité effilée formée par le procédé selon une quelconque revendication précédente.

12. Bande composite (10) selon la revendication 11, dans laquelle une fraction en volume de fibres de l'extrémité effilée (30) est sensiblement la même qu'une fraction en volume de fibres du reste de la bande.

13. Raidisseur de poutre (80) pour une pale d'éolienne (90) comprenant une pile de bandes composites (10) intégrées ensemble, dans lequel une ou plusieurs des bandes composites sont une bande selon la revendication 11 ou la revendication 12 ou sont fabriquées selon le procédé selon l'une quelconque des revendications 1 à 10.

14. Pale d'éolienne (90) comprenant un raidisseur de poutre (80) selon la revendication 13.
